# EUROPÄISCHE PATENTANMELDUNG

(11) **EP 0 795 968 A2**
(43) Veröffentlichungstag der Anmeldung: **17.09.1997**
(21) Anmeldenummer: 97102991.3
(22) Anmeldetag: 24.02.1997
(51) Int. Cl.: H04B 1/38

(54) **Akku-Pack für ein elektronisches Handgerät**

(30) Priorität: 13.03.1996 DE 19609854
(71) Anmelder: AEG MOBILE COMMUNICATION GmbH, D-89081 Ulm (DE)
(72) Erfinder: Preuth, Hans-Georg, Dipl.Ing., 89081 Ulm Donau (DE); Bischof, Stefan, Dipl.-Ing. FH, 89278 Nersingen (DE); Stock, Anton, Dipl.-Ing. FH, 89191 Nersingen (DE)
(74) Vertreter: Körner, Ekkehard, Dipl.-Ing.

(57) **Zusammenfassung**

Ein flacher Akku-Pack für ein elektronisches Handgerät, insbesondere ein Handfunktelefon, hat ein Gehäuse aus zwei flachen Gehäuseschalen, die jeweils aus einer Metallblechplatte und einem daran angespritzten oder angegossenen Rahmen aus Kunststoff bestehen. Die Rahmen der Gehäuseschalen sind miteinander fest verbunden, insbesondere verschweißt. Die durch die Metallblechplatten erreichte Verringerung der Wandstärke des Gehäuses erlaubt eine Volumenvergrößerung der von dem Gehäuse aufgenommenen Akkumulatorzellen und somit eine Vergrößerung der Kapazität des Akku-Pack gegenüber Konstruktionen, bei denen das Gehäuse vollständig aus Kunststoff besteht.

## Beschreibung

Die Erfindung bezieht sich auf einen Akku-Pack für ein elektronisches Handgerät, insbesondere ein Handfunktelefon, mit einem Gehäuse aus zwei im wesentlichen flachen, rechteckigen Schalen, die an zwei einander zugewandten Randflächen fest miteinander verbunden sind und eine flache Kammer mit darin befindlichen Akkumulatorzellen umgrenzen.

Akku-Packs dieser Art sind allgemein bekannt und finden zur Stromversorgung beispielsweise von Handfunktelefonen Verwendung. Ein solches Handfunktelefon weist an seiner Rückseite eine Gehäuseaussparung auf, die im Gebrauch von dem Akku-Pack ausgefüllt wird, wobei die Außenseite von dessen Gehäuse einen Teil der Rückenfläche des Handfunktelefons bildet und an dessen Umriß angepaßt ist. Da Akku-Packs eine begrenzte Ladekapazität haben, die für längeren Gebrauch des damit ausgerüsteten Handgeräts die Mitführung eines Reserve-Akkupacks empfiehlt, sofern keine Nachlademöglichkeit besteht, und auch keine unbegrenzte Lebensdauer haben, muß der Akku-Pack austauschbar sein. Bei vielen Konstruktionen wird nach dem Lösen des Akku-Pack vom Handfunktelefon ein Aufnahmeraum für eine Codekarte für den Betrieb des Handfunktelefons zugänglich.

Handfunktelefone zur Verwendung im GSM-Netz sind in breitem Einsatz. Bei Benutzern solcher Geräte besteht allgemein der Wunsch nach hoher Betriebsbereitschaftszeit des Geräts pro Ladezyklus des Akku-Pack. Eine Vergrößerung der Betriebsbereitschaftszeit mit einem einzigen Akku-Pack kann entweder durch schaltungstechnische Maßnahmen, die eine Verringerung des Stromverbrauchs des Geräts zum Ziel haben und nur bei der Neukonzeption des Geräts realisiert werden können, oder durch Vergrößerung der Kapazität des Akku-Pack erreicht werden. Aufgrund technologischer Vorgaben ist eine Vergrößerung der Kapazität des Akku-Pack in aller Regel aber nur durch eine Vergrößerung des Zellenvolumens zu erreichen.

Bekannte Akku-Packs für Handfunktelefone haben ein Gehäuse, das aus zwei im wesentlichen flachen, rechteckigen Kunststoffschalen besteht. Wenn man bei gegebenen Außenabmessungen des Gehäuses das Volumen der Zellen vergrößern möchte, muß das Volumen des Gehäusematerials verringert werden. Bei den die Hauptflächen des Gehäuses bildenden Gehäusewänden können jedoch gewisse minimale Kunststoff-Wandstärken aus Stabilitäts- und fertigungstechnischen Gründen nicht unterschritten werden.

Der Erfindung liegt die Aufgabe zugrunde, einen Akku-Pack der eingangs genannten Art anzugeben, der bei gegebenen Außenabmessungen zum Einsatz von Akkumulatorzellen mit im Vergleich zu bekannten Akku-Packs höher Kapazität geeignet ist.

Diese Aufgabe wird durch die im Anspruch 1 angegebenen Merkmale gelöst. Vorteilhafte Ausgestaltungen der Erfindung sind Gegenstand der Unteransprüche.

Die Erfindung schafft einen Akku-Pack mit einem Gehäuse in einer Verbundkonstruktion. Das Gehäuse besteht aus zwei Schalen, von denen die Hauptfläche jeweils von einer tiefgezogenen Metall-Blechplatte gebildet ist, die die notwendige Stabilität bei geringer Wanddicke gewährleistet, während der Randbereich von einem an die Blechplatte angespritzten Kunststoffrahmen gebildet ist, dessen Umriß die notwendigen Anschlußmaße und -einrichtungen zur Anbringung am Gehäuse eines elektronischen Handgeräts, insbesondere eines Handfunktelefons, aufweist und zugleich zur Verbindung mit dem Rahmen der anderen Gehäuseschale dient. Mit dieser Technologie ist es möglich, die Wandstärke der die Hauptflächen des Akku-Pack bildenden Wände auf bis zu 0,2 mm zu reduzieren, ohne daß die Stabilität des Akku-Pack und die sichere Aufbewahrung der darin enthaltenen Akkumulatorzellen beeinträchtigt wird. Wandstärken solcher Minimalmaße sind in Kunststofftechnik ohne Bruchgefahr nicht zu erreichen.

Zur Herstellung eines erfindungsgemäßen Akku-Pack werden Metallblechplatten in der erforderlichen Gestalt im Stanzverfahren ausgebildet, d.h. ausgestanzt und ggf. tiefgezogen, und anschließend jeweils mit einem Rahmen aus Kunststoff, vorzugsweise thermoplastischem Kunststoff, umgossen bzw. umspritzt, wobei ggf. zugleich die notwendigen elektrischen Anschlußelemente in das Kunststoffmaterial eingebettet werden können. In eine der so vorbereiteten Schalen werden dann die Akkumulatorzellen eingelegt und mit den elektrischen Anschlußelementen verbunden, bevor die andere Gehäuseschale aufgelegt und an ihrem Rahmen mit der erstgenannten Gehäuseschale fest verbunden wird, beispielsweise durch gegenseitiges Verrasten, besser aber durch Verkleben oder Verschweißen, insbesondere Hochfrequenz-Verschweißen.

Für die gegenseitige Ausrichtung der Gehäuseschalen ist es günstig, wenn ihre Rahmen zueinander komplementäre Elemente, wie Vorsprünge und Vertiefungen aufweisen, die ineinandergreifen.

Die Erfindung wird nachfolgend unter Bezugnahme auf die Zeichnungen näher erläutert. Es zeigt:
- Fig. 1: eine perspektivische Darstellung einer ersten Gehäuseschale von der Innenseite her gesehen, in etwa natürlicher Größe;

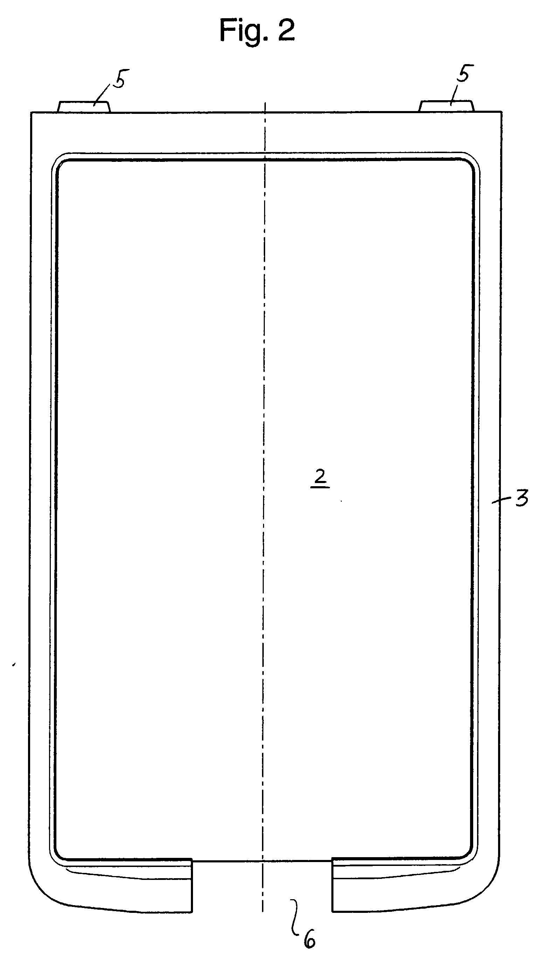

- Fig. 2: die Außenseite der Gehäuseschale von Fig. 1 in vergrößertem Maßstab;
- Fig. 3: eine Draufsicht auf die Innenseite der Gehäuseschale von Fig. 1;
- Fig. 4: eine Seitenansicht der Gehäuseschale von Fig. 1;
- Fig. 5: eine Schnittdarstellung längs der Linie B-B von Fig. 3;
- Fig. 6: die Einzelheit Y von Fig. 5 im Schnitt;
- Fig. 7: die Einzelheit Z von Fig. 3;
- Fig. 8: eine stirnseitige Ansicht der Gehäuseschale von Fig. 3;
- Fig. 9: einen Längsschnitt durch die Gehäuseschale von Fig. 1 längs der Linie A-A von Fig. 3;
- Fig. 10: eine perspektivische Darstellung einer zur Gehäuseschale nach Fig. 1 passenden zweiten Gehäuseschale, in etwa natürlicher Größe;
- Fig. 11: eine Draufsicht auf die Außenseite der Gehäuseschale von Fig. 10;
- Fig. 12: einen Schnitt durch die Gehäuseschale nach Fig. 10 längs der Linie D-D von Fig. 11;
- Fig. 13: eine Draufsicht auf die Innenseite der Gehäuseschale von Fig. 10;
- Fig. 14: eine Ansicht der in Fig. 13 unteren Stirnseite der Gehäuseschale von Fig. 10;
- Fig. 15: eine Darstellung der in Fig. 13 oberen Stirnseite der Gehäuseschale von Fig. 10;
- Fig. 16: einen Schnitt durch die Gehäuseschale von Fig. 10 längs der Linie A-A von Fig. 13;
- Fig. 17: in vergrößertem Maßstab das Detail X von Fig. 13;
- Fig. 18: einen Schnitt durch die Gehäuseschale von Fig. 10 längs der Linie B-B von Fig. 13;
- Fig. 19: einen Schnitt durch die Gehäuseschale von Fig. 10 längs der Linie C-C von Fig. 13;
- Fig. 20: eine Draufsicht auf die Innenseite einer Metallblechplatte der Gehäuseschale von Fig. 10;
- Fig. 21: eine Seitenansicht der Blechplatte von Fig. 20;
- Fig. 22: eine Einzelheit aus Fig. 21 in vergrößertem Maßstab;
- Fig. 23: einen Schnitt durch die Blechplatte längs der Linie B-B von Fig. 20, und
- Fig. 24: eine Einzelheit aus Fig. 23 in vergrößertem Maßstab.

Das in den Zeichnungen dargestellte Ausführungsbeispiel der Erfindung wird nun in Zusammenschau der Zeichnungen erläutert. Die Zeichnungen zeigen nur die Gehäuseschalen und deren Einzelheiten, auf eine Darstellung auch der von ihnen aufgenommenen Akkumulatorzellen wurde aus Übersichtlichkeitsgründen verzichtet. Sie ist zum Verständnis der Erfindung nicht erforderlich.

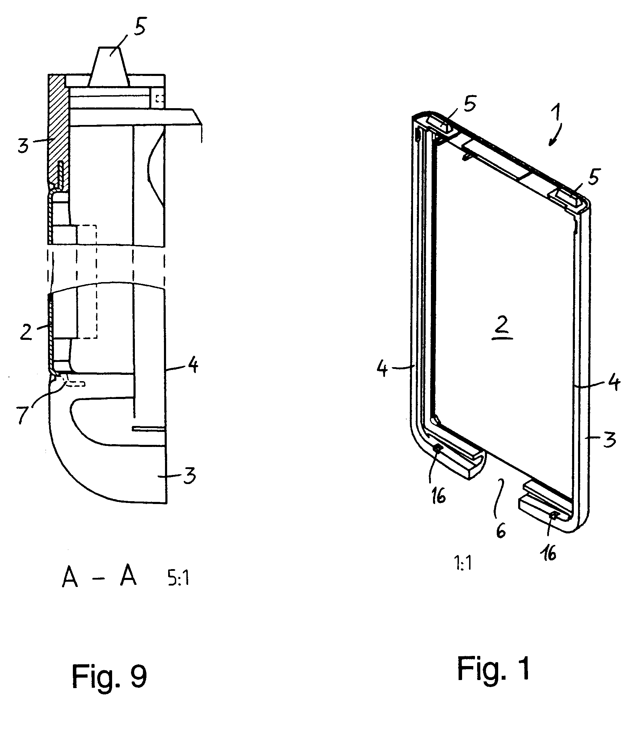

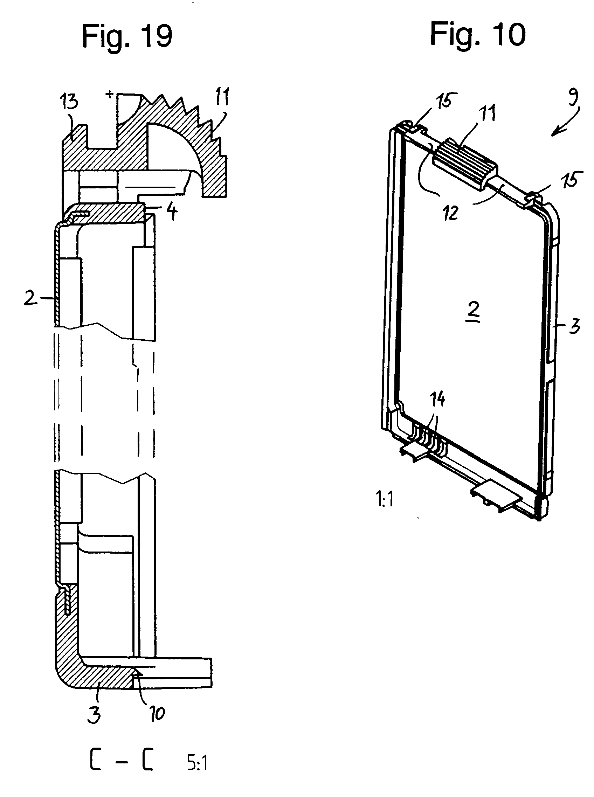

Die Fig. 1 und 10 zeigen in etwa natürlichem Maßstab in perspektivischer Darstellung zwei zueinanderpassende Gehäuseschalen, wobei man erkennt, daß zum Zusammenbau des Gehäuses die in Fig. 10 dargestellte zweite Gehäuseschale in gegenüber der Darstellung gestürztem Zustand auf die in Fig. 1 dargestellte erste Gehäuseschale aufgelegt werden muß.

Die erste, insgesamt mit 1 bezeichnete Gehäuseschale nach Fig. 1 besteht aus einer gestanzten, tiefgezogenen Metallblechplatte 2, beispielsweise aus Stahl, Aluminium, Kupfer, Messing oder Bronze, und einem an deren Rand angespritzten Rahmen 3, der von der Blechplatte 2 hochsteht und eine Stirnfläche 4 aufweist. An seinem einen Ende hat der Rahmen 3 in Längsrichtung vorstehende Vorsprünge 5, die zum Eingriff in dazu passende Vertiefungen in einem von dem Akku-Pack zu versorgenden elektronischen Gerät bestimmt sind. An der anderen Stirnseite der Gehäuseschale 1 weist der Rahmen 3 einen Ausschnitt 6 auf, der für die Aufnahme eines Rastschiebers bestimmt ist, der später unter Bezugnahme auf die Fig. 10 bis 19 erläutert wird.

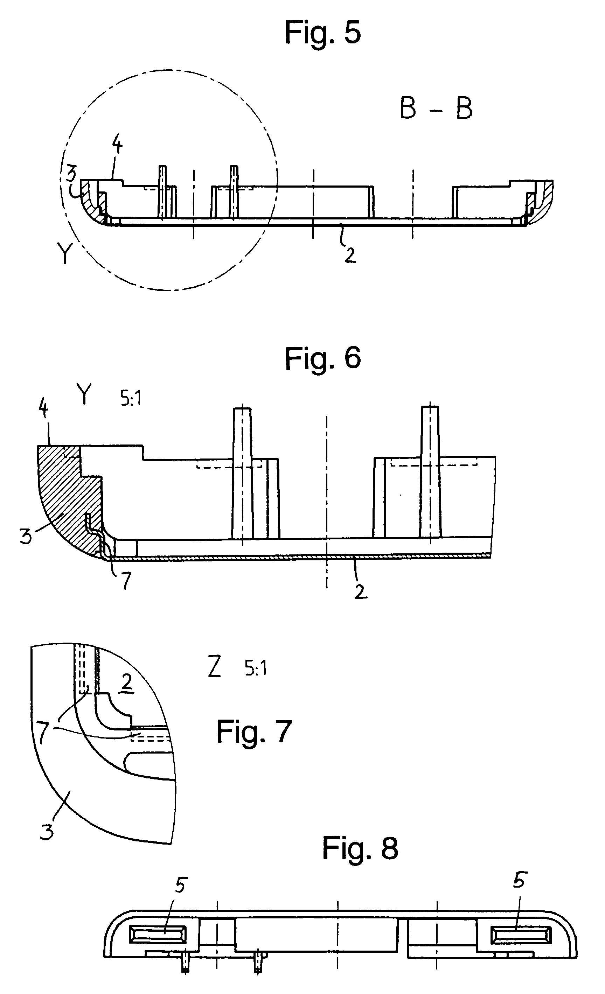

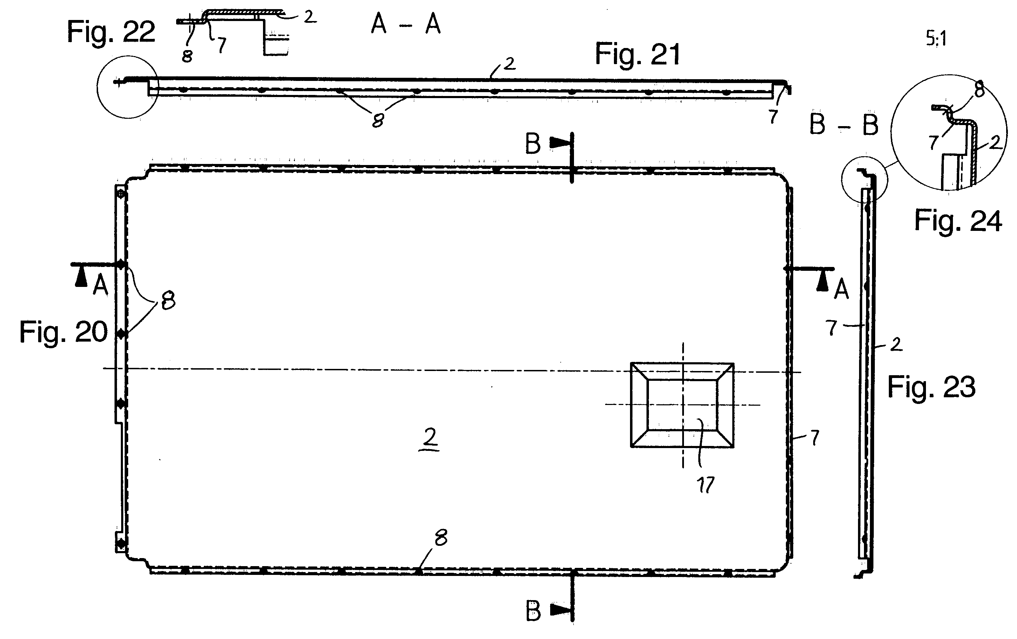

Wie aus den Fig. 5 bis 7 und 9 entnommen werden kann, weist die Blechplatte 2 einen von der Fläche der Blechplatte hochgebogenen Rand 7 auf, der in das aus Kunststoff bestehende Material des Rahmens 3 eingebettet ist. Wie Fig. 6 zeigt, ist dieser Rand 7 an drei der Schenkel des Rahmens 3 dreifach abgewinkelt, sodaß sein Endabschnitt nach oben vorsteht, während gemäß Fig. 9 der Rand der Blechplatte 2 an dem den Vorsprüngen 5 zugewandten Ende der Blechplatte 2 nur zweifach abgewinkelt ist, sodaß dort sein Endabschnitt sich parallel zur Ebene der Blechplatte 2 in den Rahmen 3 hinein erstreckt. Wie aus Fig. 20 erkennbar ist, weisen der Rand der Blechplatte 2 eine Vielzahl von Durchbrüchen in Form von Löchern 8 auf, die beim Spritzen oder Gießen des Kunststoffmaterials von diesem durchdrungen werden.

Die zweite Gehäuseschale gemäß Fig. 10, die insgesamt mit 9 bezeichnet ist, besteht wiederum aus einer tiefgezogenen Blechplatte 2 und einem an diese angespritzten Rahmen 3. Der Rahmen 3 weist an seiner Stirnfläche 4 einen Absatz 10 auf, der der Zentrierung des Rahmens 3 der ersten Gehäuseschale 1 dient.

Der Rand 7 der Blechplatte 2 der zweiten Gehäuseschale 9 ist vergleichbar dem Rand der Blechplatte 2 der ersten Gehäuseschale 1 ausgebildet, d.h. an drei Schenkeln des angespritzten Rahmens 3 ist der Rand 7 dreifach abgewinkelt und an einem Schenkel, der dem Ansatz 10 zugewandt ist, ist der Rand nur zweifach abgewinkelt, vgl. Fig. 19.

An seiner einen Stirnseite ist der Rahmen 3 der zweiten Gehäuseschale 9 mit einem elastisch ausgebildeten Rastschieber 11 versehen, der an elastischen Bändern 12 aufgehängt und über diese integral mit dem Rahmen 3 verbunden ist. Der Rastschieber 11 hat gemäß Fig. 19 eine Nase 13, die der Verrastung am Gehäuse eines elektronischen Geräts dient, mit der der Akku-Pack zur Stromversorgung desselben zu verbinden ist (in den Zeichnungen nicht dargestellt).

Am anderen Ende der zweiten Gehäuseschale 9 sind an dieser Aufnahmen 14 für elektrische Anschlußelemente zum Anschluß der hier nicht dargestellten Akkumulatorzellen ausgebildet.

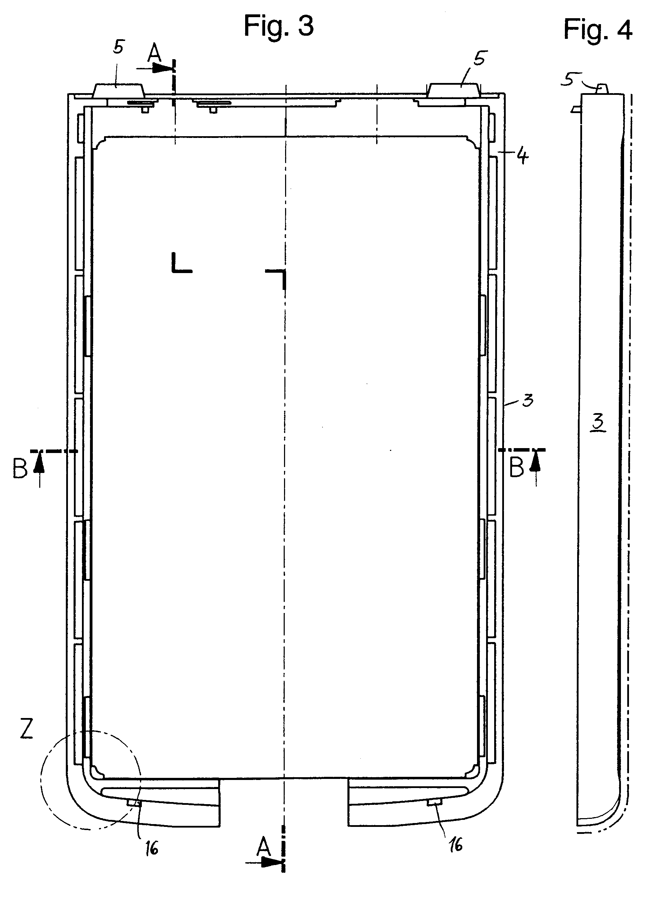

Seitlich neben den Enden der Bänder 12 trägt der Rahmen 3 je eine vorstehende Nase 15, die zum Eingreifen in entsprechende Aussparungen 16 an der ersten Gehäuseschale 1 bestimmt sind, siehe dort die Fig. 1 und 3, die ebenfalls dem Ausrichten der beiden Gehäuseschalen zueinander dienen.

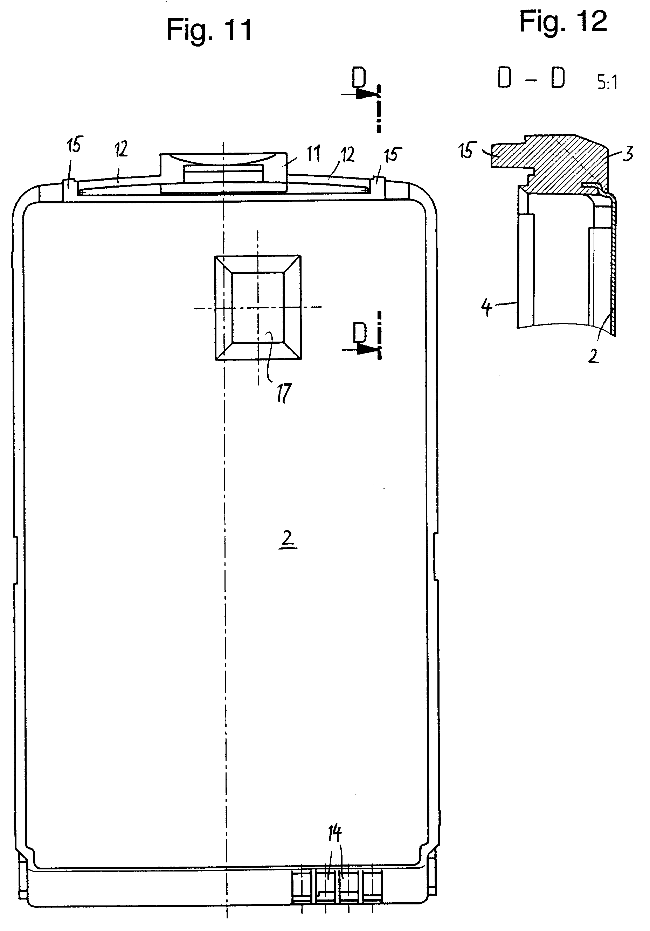

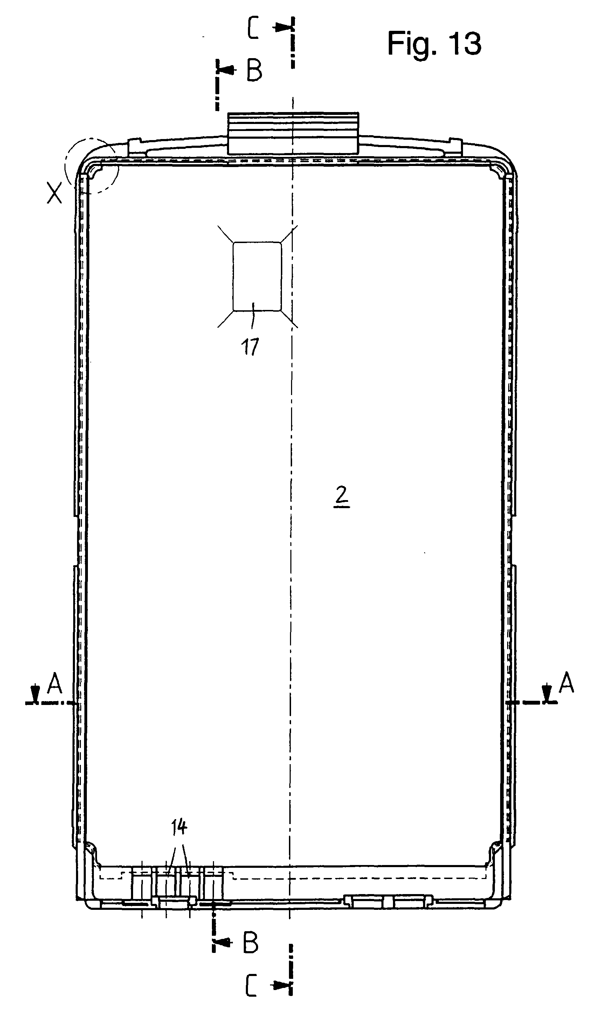

Die Blechplatte 2 der zweiten Gehäuseschale 9 weist einen nach außen vorstehenden flächen- oder kissenartigen Vorsprung 17 auf (siehe Fig. 11 und 13), der an einer vorbestimmten Stelle ausgebildet ist, wo beim Einsatz des Akku-Pack in einem Handfunktelefon die elektrischen Anschlußflecken einer für den Betrieb des Handfunktelefons notwendigen Chip-Karte liegt, die in das Handfunktelefon unter den Akku-Pack eingelegt und von diesem abgedeckt wird. Dieser kissenartige Vorsprung 17 verbessert den Druck auf die Chip-Karte im Bereich der Anschlußflecken, um den elektrischen Kontakt zwischen diesen und geräteseitigen Anschlußelementen zu verbessern. Dieser Vorsprung 17 ist im Prägeverfahren beim Stanzen der Blechplatte 2 ausgebildet.

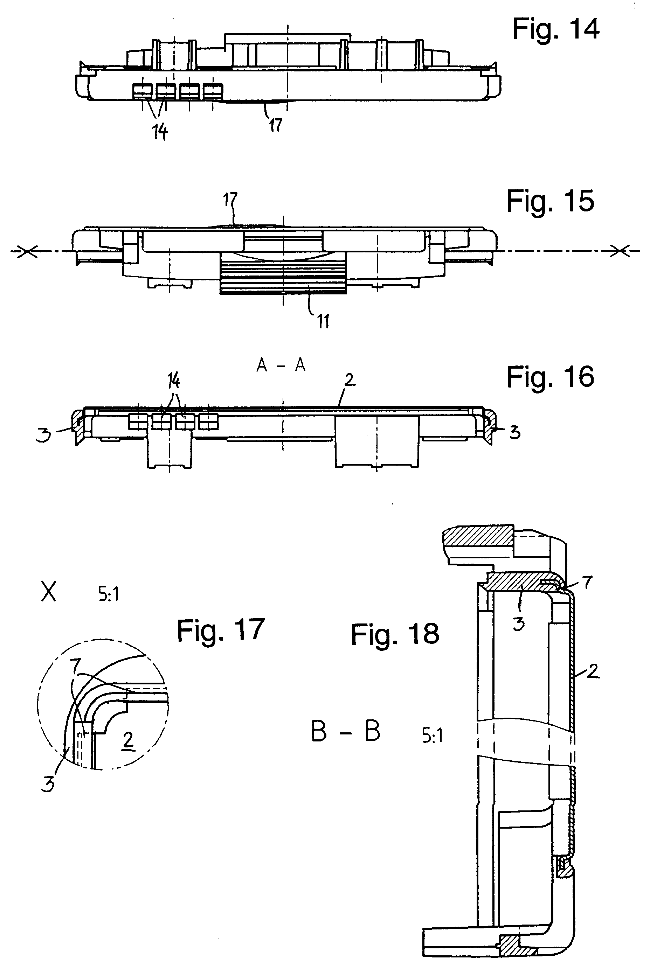

Es ist abschließend zu erwähnen, daß in den Eckbereichen auf die Hochbiegung des Randes 7 der Blechplatte 2 verzichtet werden kann, wie die Einzelheiten Z gemäß Fig. 7 und X gemäß Fig. 17 und die Fig. 20 zeigen, um den Biegevorgang der Blechplatte 2 zu erleichtern.

## Patentansprüche

1. Akku-Pack für ein elektronisches Handgerät, insbesondere ein Handfunktelefon, mit einem Gehäuse aus zwei im wesentlichen flachen, rechteckigen Schalen, die an zwei einander zugewandten Randflächen fest miteinander verbunden sind und eine flache Kammer mit darin befindlichen Akkumulatorzellen umgrenzen, **dadurch gekennzeichnet**, daß jede Gehäuseschale (1,9) aus einer flachen, tiefgezogenen Metallblechplatte (2) besteht, die an ihrem Rand (7) mit einem Rahmen (3) aus Kunststoff umspritzt oder umgossen ist, und die Rahmen (3) der beiden Gehäuseschalen (1,9) einander zugewandte Stirnflächen (4) aufweisen, die durch gegenseitige Verrastung, durch Verklebung oder Verschweißung miteinander verbunden sind.

2. Akku-Pack nach Anspruch 1, dadurch gekennzeichnet, daß der eine Rahmen (9) Vorsprünge (15) und der andere Rahmen (1) dazu komplementäre Vertiefungen (16) zur gegenseitigen Ausrichtung der Gehäuseschalen (1,9) vor dem festen Verbinden aufweisen.

3. Akku-Pack nach einem der vorhergehenden Ansprüche, dadurch gekennzeichnet, daß am Rahmen (3) der einen Gehäuseschale (9) ein Verriegelungsschieber (11) zur Verrastung des Gehäuses (1,2) an einem elektronischen Gerät elastisch ausgebildet ist.

4. Akku-Pack nach einem der vorhergehenden Ansprüche, dadurch gekennzeichnet, daß am Rahmen (3) einer der Gehäuseschalen (1,2) Vorsprünge (5) zum Eingreifen in dazu komplementäre Ausnehmungen an einem elektronischen Gerät ausgebildet sind.

5. Akku-Pack nach einem der vorhergehenden Ansprüche, dadurch gekennzeichnet, daß an der Metallblechplatte (2) einer der Gehäuseschalen (9) ein nach außen vorstehender, flächiger, kissenartiger Vorsprung (17) ausgebildet ist.

6. Akku-Pack nach einem der vorhergehenden Ansprüche, dadurch gekennzeichnet, daß an wenigstens einer der Gehäuseschalen (1,9) wenigstens ein Vorsprung (5) zum Eingreifen in eine dazu komplementäre Vertiefung in einem elektronischen Gerät ausgebildet ist.
